# EUROPÄISCHE PATENTANMELDUNG

(11) **EP 0 973 360 A2**
(43) Veröffentlichungstag der Anmeldung: **19.01.2000**
(21) Anmeldenummer: 99113239.0
(22) Anmeldetag: 08.07.1999
(51) Int. Cl.: H05B 41/36, H05B 41/392

(54) **Signalleuchte**

(30) Priorität: 08.07.1998 DE 19830519
(71) Anmelder: TRILUX-LENZE GmbH & Co. KG, D-59759 Arnsberg (DE)
(72) Erfinder: Hasemann, Fred, Dr.-Ing., 59759 Arnsberg (DE)
(74) Vertreter: Patentanwälte Lippert, Stachow, Schmidt & Partner

(57) **Zusammenfassung**

Die Erfindung betrifft eine Signalleuchte mit wenigstens einer Lampe zur Erzeugung einer Abfolge von Lichtsignalen (6, 7, 8, 9), wobei die Lampe als eine Kompaktleuchtstofflampe (2) mit einer gasgefüllten Entladungsstrecke ausgebildet ist und eine elektronische Betriebseinrichtung (3) zum Betreiben der Kompaktleuchtstofflampe (2) vorgesehen ist.

## Beschreibung

Die Erfindung betrifft eine Signalleuchte mit wenigstens einer Lampe zur Erzeugung einer Abfolge von Lichtsignalen sowie die Verwendung einer Kompaktleuchtstofflampe als Lampe für eine Signalleuchte.

Signalleuchten der genannten Art weisen eine Lampe, vielfach auch einen Reflektor und eine farbige Abdeckscheibe mit einer lichtlenkenden Struktur auf. Sie werden beispielsweise zur Verkehrsregelung oder zur Baustellensicherung verwendet.

Üblicherweise kommen in Signalleuchten Glühlampen zum Einsatz, deren Lichtausbeute im Vergleich zum Energieverbrauch als zu gering angesehen wird.

Die ständige Abfolge von Lichtsignalen, denen kurzzeitige Aufheizphasen der Glühwendel vorangehen, wirken sich negativ auf die Lebensdauer aus. Die Wartung der bekannten Signallleuchten muß in kurzen Zeitabständen erfolgen.

Der Erfindung liegt die Aufgabe zugrunde, eine kostengünstige und wirtschaftliche Signalleuchte zu schaffen, die einen wesentlich geringeren Energiebedarf aufweist und selten gewartet werden muß.

Erfindungsgemäß wird die Aufgabe dadurch gelöst, daß bei einer Signalleuchte der eingangs genannten Art die Lampe als eine Kompaktleuchtstofflampe mit einer gasgefüllten Entladungsstrecke ausgebildet ist und eine elektronische Betriebseinrichtung zum Betreiben der Kompaktleuchtstofflampe vorgesehen ist.

Eine Kompaktleuchtstofflampe ist mit einem langen Entladungsrohr versehen, das durch Zusammenlegung in eine oder mehrere Schlaufen vorteilhaft eine gedrungene Bauform aufweist. An den Enden des Entladungsrohrs ragen mit einem Emittermaterial besetzte Glühelektroden in das Rohrinnere. Zur Lichterzeugung ist eine Ionisation der enthaltenen Gasfüllung erforderlich, die dadurch elektrisch leitfähig wird. Die Ionisation wird durch eine Aufheizung der Glühelektroden bewirkt. Diese senden Stoßionen aus, die Atome des Leuchtstoffes zur Emission optischer Strahlung anregen.

Durch die gedrungene Bauform läßt sich die Kompaktleuchtstofflampe beispielsweise gut in einem üblichen Gehäuse einer Verkehrsampel unterbringen. Günstigerweise ist die Verwendung bekannter Zusatzbauteile, wie Reflektoren und Abdeckscheiben, möglich. Für besondere Einsatzzwecke, bei denen eine Kompaktleuchtstofflampe nur mit einer besonderen Reflektorform oder einer besonderen Abdeckscheibe einsetzbar ist, sind diese Zusatzbauteile etwa so groß, wie die bekannten Zusatzbauteile und lassen sich problemlos in die bekannten Gehäuse einbauen.

Selbstverständlich können auch herkömmliche Leuchtstofflampen, die keine kompakte Bauform aufweisen, für Signalleuchten verwendet werden.

Da jede Art von Leuchtstofflampe bei gleichem Energieeinsatz eine gegenüber einer Glühlampe etwa vier- bis fünfach höhere Lichtausbeute aufweist, sinken die Betriebskosten bei Verwendung einer Kompaktleuchtstofflampe bereits beträchtlich. Um die Signalleuchte besonders wirtschaftlich einsetzen zu können, ist dieser eine Betriebseinrichtung vorgeschaltet, die die Kompaktleuchtstofflampe nicht an der Wechselspannung des öffentlichen Stormnetzes betreibt, sondern eine abweichende, auf sie abgestimmte Spannungsversorgung bereitstellt. Mit der vorgeschalteten Betriebseinrichtung kann der Kompaktleuchtstofflampe außerdem ein elektrischer Strom mit den Parametern eingespeist werden, die für einen Signalbetrieb optimal sind. Die Einstellung der Stromstärke für den Signallichtstrom erfolgt beispielsweise durch die Veränderung der Wechselstromfrequenz, mit der die Kompaktleuchtstofflampe gespeist wird.

Vorteilhaft weist die Betriebseinrichtung als Leistungselektronik ein elektronisches Vorschaltgerät auf, über das die Energie zugeführt wird.

Für die Lebensdauer der Kompaktleuchtstofflampe ist es günstig, wenn diese mittels der Betriebseinrichtung zwischen einem Bereitschaftszustand und einem Signalzustand umschaltbar ist. Besonders ist an dieser Ausführungsform das Vorsehen eines Bereitschaftszustandes, in dem die Entladungsstrecke der Kompaktleuchtstofflampe ständig durchgezündet ist und eine geringe Lichtstärke erzeugt.

In diesem Bereitschaftszustand ist der durch die Gasstrecke der Kompaktleuchtstofflampe fließende Strom auf einen geringen Bereitschaftsstrom heruntergedimmt. Die dabei erzeugte Lichtstärke ist im normalen Betrieb der Signalleuchte nicht erkennbar. Die Kompaktleuchtstofflampe ist nicht ausgeschaltet. Man kann in diesem durchgezündeten und heruntergedimmten Zustand von einer Lichtsignalpause sprechen. Während des Signalzustands ist der Strom auf einen gegenüber dem Bereitschaftsstrom höheren Signalstrom hochgedimmt, der eine größere, erkennbare Lichtstärke erzeugt. Diese ist im normalen Betrieb der Signalleuchte als deutliches Lichtsignal erkennbar.

Durch die einfache Maßnahme, die Kompaktleuchtstofflampe während einer Lichtsignalpause nicht völlig auszuschalten, sondern einen Bereitschaftszustand zu erhalten, in dem ihre Gasstrecke ständig durchgezündet bleibt, wird die Lebensdauer der Kompaktleuchtstofflampe nahezu unabhängig von der Schalthäufigkeit. Zur Umschaltung zwischen einem Lichtsignal und einer Lichtsignalpause wird einfacherweise nur zwischen den beiden Stromstärken, nämlich dem Bereitschaftsstrom und dem Signalstrom hin- und hergeschaltet. Ein Durchzünden vor jeder Signalerzeugung ist nicht erforderlich. Von dem an den Glühelektroden einer Kompaktleuchtstofflampe enthaltenen Emittermaterial, das der Ionisation der Gasfüllung in der Leuchtstofflampe dient, wird auf diese Weise nur wenig verbraucht. Dieser geringe Verbrauch von Emittermaterial ist ein wesentlicher Grund für die hohe Schalthäufigkeit und die lange Lebensdauer der Kompaktleuchtstofflampe.

In einer einfachen Ausführungsform ist das elektronische Vorschaltgerät so geschaltet, daß im Signalzustand ein maximaler Signalstrom fließt. Beim Zurückschalten in den Bereitschaftszustand wird direkt von dem maximalen Signalstrom auf den Bereitschaftsstrom ohne Durchschreitung von Strom-Zwischenwerten zurückgeschaltet. Diese Ausführungsform ist sehr leicht handzuhaben und mit besonders einfachen und kostengünstigen Mitteln realisierbar.

Vorzugsweise liegt das durch den Bereitschaftsstrom erzeugte Bereitschaftslichtniveau in der Größenordnung von 1 % des Signallichtniveaus. Bei diesem Wert ist der Energieverbrauch im Bereitschaftszustand sehr gering. Darüberhinaus läßt sich der über die Gasstrecke der Kompaktleuchtstofflampe fließende Bereitschaftsstrom sicher bis zur nächsten Signalerzeugung aufrechterhalten.

In einer anderen Ausführungsform der Signalleuchte ist das elektronische Vorschaltgerät so schaltbar, daß im Signalzustand ein Signalstrom fließt, der kleiner oder gleich einem maximalen Signalstrom ist. Hierbei lassen sich also der Bereitschaftsstrom, der maximale Signalstrom sowie sämtliche dazwischen liegende Stromstromstärken einstellen.

Um im Signalzustand den Signalstrom nicht unter ein Niveau fallen zu lassen, bei dem keine ausreichende Erkennbarkeit des Lichtsignals mehr gegeben wäre, ist der für den Signalstrom zweckmäßige Stromstärkebereich einschränkbar beziehngsweise eingeschränkt.

In einer weiteren zweckmäßigen Weiterbildung ist eine Veränderung der von der Kompaktleuchtstofflampe erzeugten Lichtstärke möglich. Diese ist nämlich in Abhängigkeit von der Umgebungshelligkeit an diese anpassbar. Hierzu weist das elektronische Vorschaltgerät einfacherweise eine Schnittstelle auf, über die ein Steuer- oder Regelsignal einer Steuerungs- oder Regelungseinrichtung einspeisbar ist. Die Steuerung oder auch Regelung des elektronischen Vorschaltgeräts wird von einer externen Steuerungs- oder Regelungseinrichtung vorgenommen, die ebenfalls der Betriebseinrichtung für die Kompaktleuchtstofflampe zuzurechnen ist.

Wenn die Signalleuchte zur Verwendung in einer Signalleuchtenanlage mit mehreren Signalleuchten verwendet werden soll, so weist die Betriebseinrichtung zum Betreiben der Kompaktleuchtstofflampe günstigerweise ein Bus-System als Datenverbindung auf, über das mehrere Signalleuchten betreibbar sind. Im Zusammenhang mit mehreren Signalleuchten lassen sich diese vorteilhaft von einer einzigen Steuerungs- oder Regelungseinrichtung über das Bus-System betreiben.

Eine einfache Tag- und Nacht-Umschaltung, zur Anpassung der Lichtstärke ist über eine einfache Steuerungseinrichtung realisierbar. Eine stetige Anpassung an die Umgebungshelligkeit kann mit einer zusätzlichen Sensorelektronik realisiert werden, die in jedem Zeitpunkt die momentane Umgebungshelligkeit erfaßt und einer Regelungseinrichtung ein Regelsignal zur Verfügung stellt, das die stetige Nachführung der Lichtstärke der Kompaktleuchtstoff lampe bewirkt.

Um eine Signalleuchte erstmalig in Betrieb zu nehmen oder eine für längere Zeit abgeschaltete Signalleuchte erneut in Betrieb zu nehmen, muß einmalig eine Durchzündung in den Bereitschaftszustand möglich sein. Zu diesem Zweck ist die Entladungsstrecke der Kompaktleuchtstofflampe während der Vorheizphase sicherheitshalber kurzgeschlossen. Auf diese Weise wird ein frühzeitiges Durchzünden, auch Kaltstart genannt, zuverlässig verhindert. Die Durchzündung wird erst nach der Vorheizphase schaltungstechnisch ermöglicht, in dem der Kurzschluß aufgehoben wird.

Die Erindung besteht andererseits in der Verwendung einer Kompaktleuchtstofflampe als Lampe für eine Signalleuchte, die eine Abfolge von Lichtsignalen erzeugt.

Nachfolgend ist die Erfindung anhand einer Zeichnung beschrieben. Es zeigen:
- Fig.1:: Eine schematische Darstellung des Aufbaus einer Signalleuchte,
- Fig.2:: Die Darstellung einer Abfolge von Lichtsignalen und Lichtsignalpausen in einem Koordinatensystem über der Zeit,
- Fig.3:: Eine schematische Darstellung des Aufbaus einer Signalleuchte mit einer Regelungseinrichtung und einer Sensoreinrichtung,
- Fig.4:: Eine Abfolge von Lichtsignalen und Lichtsignalpausen in einem Koordinatensystem über der Zeit, wobei die Lichtstärke in Abhängigkeit der Umgebungshelligkeit geregelt ist,
- Fig.5:: Eine Signalleuchtenanlage mit mehreren Signalleuchten und einem Bus-System.

Nach der Zeichnung weist eine Signalleuchte 1 eine Kompaktleuchtstofflampe 2, eine elektronische Betriebseinrichtung 3 mit einem elektronischen Vorschaltgerät 4 und einer Steuereinrichtung 5 auf. Das elektronische Vorschaltgerät 4 weist eine Leistungselektronik zur Energieversorgung der Kompaktleuchtstofflampe 2 auf. Über die Steuereinrichtung 5 wird das elektronische Vorschaltgerät 4 gesteuert und die einzelnen Betriebszustände der Signalleuchte geschaltet. Bei der Steuereinrichtung 5 handelt es sich um eine einfache Steuerung, die die Abfolge von Lichtsignalen zeitabhängig schaltet. Die Signallichtstärke ist dabei so groß, daß sie zum einen nachts nicht blendet und zum anderen tagsüber erkennbar ist.

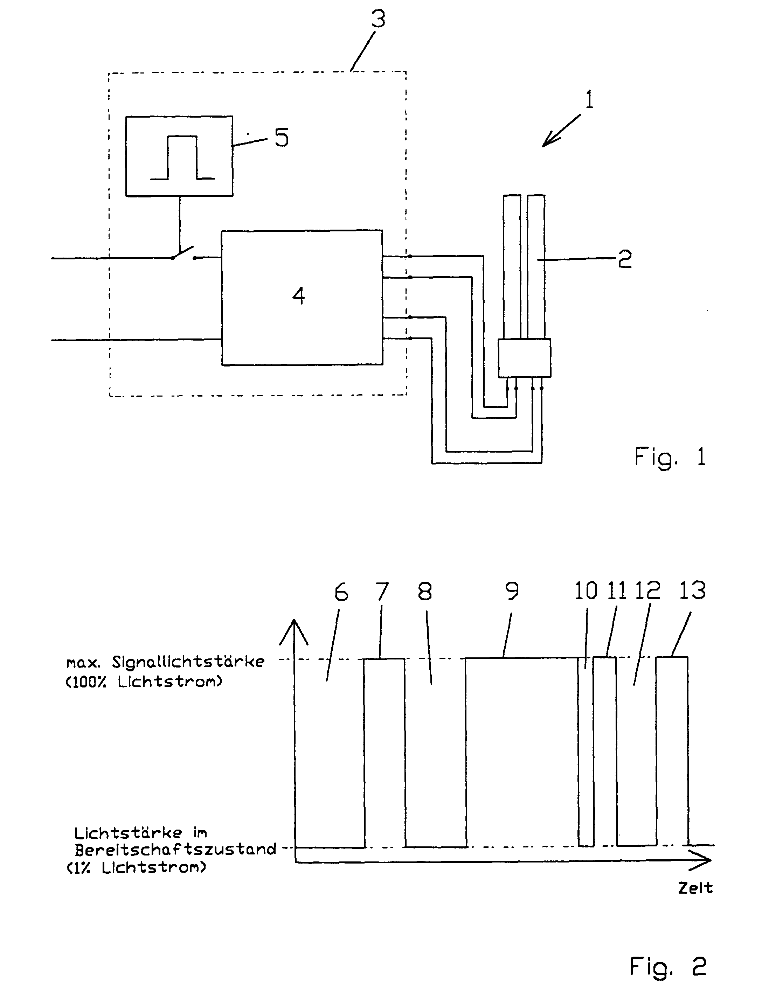

Die Fig. 2 zeigt eine im Koordinatensystem aufgetragene Abfolge von Lichtsignalen über der Zeit. Die Lichtsignale 7, 9, 11 und 13 weisen eine maximale Signallichtstärke auf. In diesem Zustand fließt ein maximaler Signalstrom. Bei der Umschaltung in die Lichtsignalpausen 6, 8, 10, 12 und 14 wird der Strom jeweils auf den Bereitschaftsstrom, der einen Wert von etwa 1 % der maximalen Signalstromstärke beträgt, heruntergedimmt. Zwischenwerte zwischen 1% und 100 % Strom sind mit dieser einfachen Steuerungseinrichtung 5 nicht schaltbar.

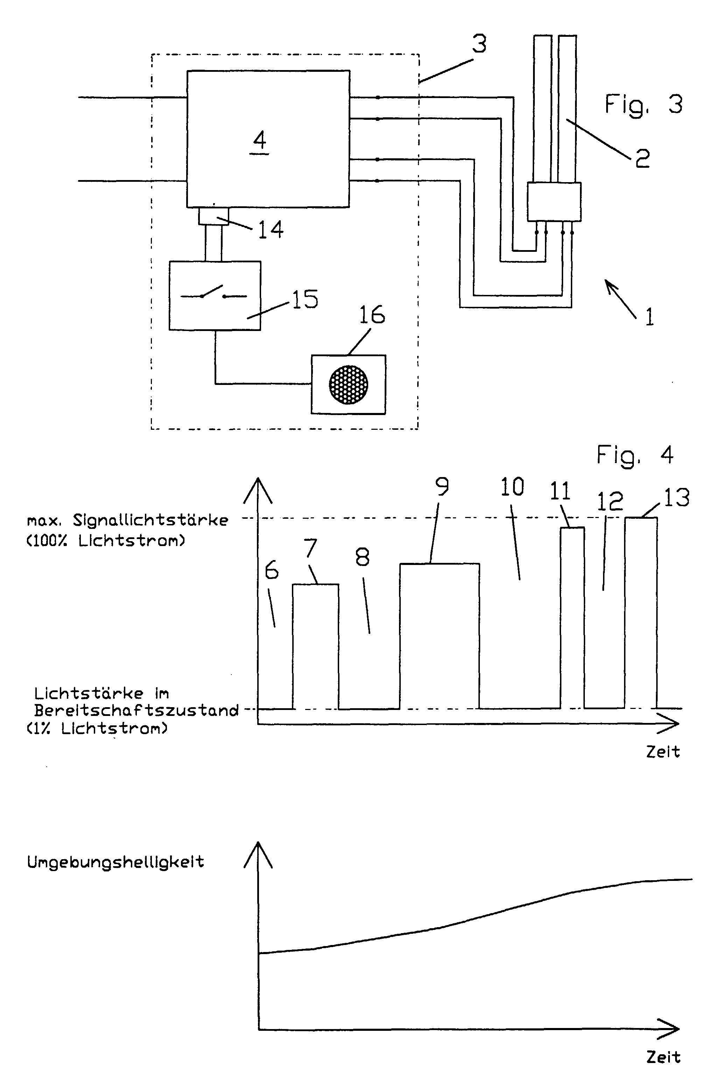

Die Fig. 3 zeigt eine Signalleuchte, mit einer Betriebseinrichtung 3, deren elektronisches Vorschaltgerät 4 eine Schnittstelle 14, eine Regelungseinrichtung 15 und eine Sensoreinrichtung 16 aufweist, wobei die mit der Regelungseinrichtung 15 verbundene Sensoreinrichtung 16 die Umgebungshelligkeit erfaßt. Die Regelungseinrichtung 15 erhält über die Verbindung mit der Sensoreinrichtung 16 ein Regelsignal, mit dem sie die bei der momentanen Umgebungshelligkeit erforderliche Signallichtstärke ermittelt und das elektronische Vorschaltgerät 4 entsprechend dosiert ansteuert. Es wird ein Signalstrom auf entsprechendem Niveau geschaltet, der dann die erforderliche Signallichtstärke der Kompaktleuchtstofflampe 2 erzeugt.

Die Fig. 4 zeigt eine Abfolge von Lichtsignalen gemäß der Signalleuchte von Figur 3. Die Abfolge ist wiederum in einem Koordinatensystem über der Zeit aufgetragen. Außerdem ist in Figur 4 in einem weiteren Koordinatensystem die Umgebungshelligkeit über der Zeit dargestellt. Wie aus der Figur 4 ersichtlich, ist es mit der Regelungseinrichtung 15 möglich, den Signalstrom der Kompaktleuchtstofflampe stetig an die Umgebungshelligkeit anzupassen. Selbstverständlich kann die Regelungseinrichtung auch derart vereinfacht sein, daß lediglich das über- oder unterschreiten einer bestimmten Helligkeitsschwelle der Umgebungshelligkeit ermittelt wird. Diese Helligkeitsschwelle ist zur Realisierung einer einfachen Umschaltung zwischen Tag- und Nachtbetrieb verwertbar. Dabei würden für den Tagbetrieb und den Nachtbetrieb lediglich zwei unterschiedliche hohe Signalströme für den Signalzustand geschaltet. Eine stetige Anpassung der Lichtstärke durch Einstellung von Zwischenwerten des Signalstromes wären mit dieser Konstruktion nicht möglich.

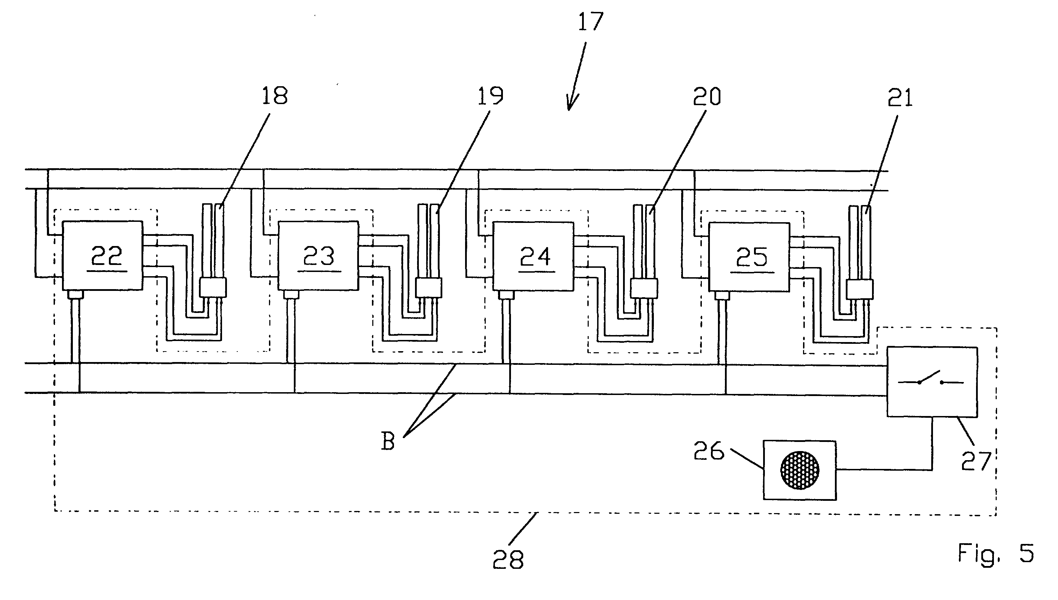

In der Fig. 5 ist eine Signalleuchtenanlage 17 mit mehreren Signalleuchten 18, 19, 20 und 21 dargestellt, die alle mit eigenen elektronischen Vorschaltgeräten 22, 23, 24 und 25 versehen sind. Die Schaltung der elektronischen Vorschaltgeräte 22, 23, 24 und 25 erfolgt über ein gemeinsames Bus-System B sowie eine gemeinsame Sensorelektronik 26 und eine gemeinsame Regelungseinrichtung 27 zur Anpassung der von den Signalleuchten erzeugten Lichtstärke an die Umgebungshelligkeit.

Über das Bus-System B sind die einzelnen elektronischen Vorschaltgeräte 22, 23, 24 und 25 alle eindeutig adressierbar. Somit kann für jede Signalleuchte die richtige Abfolge der Lichtsignale geschaltet werden.

Die elektronischen Vorschaltgeräte 22, 23, 24 und 25 sowie die Sensorelektronik 26 und die Regelungseinrichtung 27 sind zu der Betriebseinrichtung 28 zusammengefaßt, wie durch die gestrichelte Linie angedeutet.

### Bezugszeichenliste

- 1: Signalleuchte
- 2: Kompaktleuchtstofflampe
- 3: Betriebseinrichtung
- 4: elektronisches Vorschaltgerät
- 5: Steuereinrichtung
- 6: Lichtsignal
- 7: Lichtsignal
- 8: Lichtsignal
- 9: Lichtsignal
- 10: Lichtsignalpause
- 11: Lichtsignalpause
- 12: Lichtsignalpause
- 13: Lichtsignalpause
- 14: Schnittstelle
- 15: Regelungseinrichtung
- 16: Sensoreinrichtung
- 17: Signalleuchtenanlage
- 18: Signalleuchte
- 19: Signalleuchte
- 20: Signalleuchte
- 21: Signalleuchte
- 22: elektronisches Vorschaltgerät
- 23: elektronisches Vorschaltgerät
- 24: elektronisches Vorschaltgerät
- 25: elektronisches Vorschaltgerät
- 26: Sensorelektronik
- 27: Regelungseinrichtung
- 28: Betriebseinrichtung
- B: Bus-System

## Patentansprüche

1. Signalleuchte mit wenigstens einer Lampe zur Erzeugung einer Abfolge von Lichtsignalen (6, 7, 8, 9), **dadurch gekennzeichnet,** daß die Lampe als eine Kompaktleuchtstofflampe (2) mit einer gasgefüllten Entladungsstrecke ausgebildet ist und eine elektronische Betriebseinrichtung (3) zum Betreiben der Kompaktleuchtstofflampe (2) vorgesehen ist.

2. Signalleuchte nach Anspruch 1, **dadurch gekennzeichnet,** daß die elektronische Betriebseinrichtung (3) ein elektronisches Vorschaltgerät (4) aufweist.

3. Signalleuchte nach Anspruch 1 oder 2, **dadurch gekennzeichnet,** daß mit der Betriebseinrichtung (3) die Kompaktleuchtstofflampe (2) zwischen einem Bereitschaftszustand und einem Signalzustand umschaltbar ist, wobei die Entladungsstrecke der Kompaktleuchtstofflampe (2) im Bereitschaftszustand durchgezündet und auf einen eine geringe Lichtstärke erzeugenden Bereitschaftsstrom heruntergedimmt ist und im Signalzustand ein höherer Signalstrom fließt, der eine größere, erkennbare Lichtstärke erzeugt.

4. Signalleuchte nach Anspruch 3, **dadurch gekennzeichnet,** daß im Signalzustand ein maximaler Signalstrom fließt.

5. Signalleuchte nach Anspruch 4, **dadurch gekennzeichnet,** daß das Bereitschaftslichtniveau in der Größenordnung von einem Prozent des Signallichtniveaus liegt.

6. Signalleuchte nach Anspruch 3, **dadurch gekennzeichnet,** daß im Signalzustand ein Signalstrom fließt, der kleiner oder gleich einem maximalen Signalstrom ist.

7. Signalleuchte nach Anspruch 2, **dadurch gekennzeichnet,** daß das elektronische Vorschaltgerät (4) eine Schnittstelle (14) aufweist, über die ein Steuer- oder Regelsignal einspeisbar ist, wobei die Betriebseinrichtung (3) zusätzlich mit einer Steuerungs-(5) oder Regelungseinrichtung (15) versehen ist, mit welcher die von der Kompaktleuchtstofflampe (2) erzeugte Lichtstärke an die Umgebungshelligkeit anpassbar ist.

8. Signalleuchte zur Verwendung in einer Signalleuchtenanlage mit mehreren Signalleuchten nach einem der Ansprüche 1 bis 8, **dadurch gekennzeichnet,** daß die Betriebseinrichtung (3) zum Betreiben der Kompaktleuchtstofflampe (2) ein Bus-System aufweist, über das mehrere Signalleuchten betreibbar sind.

9. Signalleuchte nach einem der Ansprüche 1 bis 8, **dadurch gekennzeichnet,** daß die Glühelektroden der Kompaktleuchtstofflampe vorheizbar sind, und daß die Glühelektroden während einer Vorheizphase kurzgeschlossen sind.

10. Verwendung einer Kompaktleuchtstofflampe als Lampe für eine Signalleuchte, die eine Abfolge von Lichtsignalen erzeugt.
